# EUROPÄISCHE PATENTSCHRIFT

(11) **EP 2 091 766 B1**
(45) Veröffentlichungstag und Bekanntmachung des Hinweises auf die Patenterteilung: **15.05.2013**
(21) Anmeldenummer: 07856066.1
(22) Anmeldetag: 07.12.2007
(51) Int. Cl.: B60D 5/00, B61D 17/22

(54) **BALG**
BELLOWS
SOUFFLET

(30) Priorität: 23.12.2006 DE 102006061503
(43) Veröffentlichungstag der Anmeldung: 26.08.2009
(73) Patentinhaber: Hübner GmbH, 34123 Kassel (DE)
(72) Erfinder: Dr.KOUKAL, Claus-Ekkehard, 34128 Kassel (DE)
(74) Vertreter: Walther, Walther & Hinz GbR
(86) Internationale Anmeldenummer: PCT/DE2007/002211
(87) Internationale Veröffentlichungsnummer: WO 2008/077368

(56) Entgegenhaltungen:
- EP-A- 0 339 227
- EP-A- 0 389 934
- DE-A1- 2 839 775
- DE-A1- 10 026 405

## Beschreibung

Die vorliegende Erfindung betrifft einen Balg als Teil eines Übergangs zwischen zwei gelenkig miteinander verbundenen Fahrzeugen oder einer Fluggastbrücke gemäß dem Oberbegriff des Anspruches 1.

Eine Materialbahn für die Herstellung eines Balges ist bekannt. Üblicherweise besteht eine solche Materialbahn aus zwei Gewebeschichten, wobei die Gewebeschichten mit einem synthetischen Kautschuk beschichtet sind, der nach dem Aufbringen zu einem Elastomer ausvulkanisiert. Es sind hierbei auch sogenannte Materialbahnen mit einer Silikonbeschichtung bekannt.

Zur Stabilisierung des Balges ist vorgesehen, dass sowohl bei einem Wellen- als auch bei einem Faltenbalg umlaufende Rahmen vorgesehen sind, die im Bereich der Kanten die Materialbahn klemmend erfassen. Diese Rahmen sind aus Aluminium hergestellt und erfassen die Materialbahn klemmend. Um die erforderliche Dichtigkeit des Balges zu gewährleisten, ist im Bereich des Rahmens ein Dichtungsmaterial vorgesehen, das den Eintritt von Wasser verhindert. Um weiterhin zu gewährleisten, dass der Rahmen tatsächlich dauerhaft die Materialbahnen, die von dem Rahmen ergriffen werden, erfasst, ist der Rahmen über seine Länge im Bereich der Stoffbahnen gesickt. Des Weiteren ist im Bereich der Ecken vorgesehen, dass die Materialbahnen dort Einsätze aufweisen, d. h. der Balg und zwar sowohl als Wellen- als auch als Faltenbalg, ist im Eckbereich mit gesonderten Einsätzen versehen. Dies deshalb, weil der Balg im Eckbereich erhöhten Belastungen ausgesetzt ist.

Aus alledem ergibt sich, dass die Herstellung eines Balges sehr aufwändig ist, was einen solchen Balg relativ teuer macht. Zur Verminderung der Kosten ist insofern bereits bekannt, solche Bälge zwischen zwei gelenkig miteinander verbundenen Fahrzeugen nur mit einer einzigen Gewebebahn herzustellen, wobei hierbei dann das Gewebe vor der Beschichtung mit einem Kunststoff plastisch verformt wird, wobei das Ergebnis der plastischen Verformung ist, dass die zwischen den einzelnen Fäden bestehenden Hohlräume im Wesentlichen verschwunden sind. Insofern wird weniger Beschichtungsmaterial benötigt, da dieses Beschichtungsmaterial, sei es ein organischer Kautschuk, der im Nachhinein noch vulkanisiert wird, oder auch ein Silikon, dünner aufgebracht werden kann, was zur Folge hat, dass der Balg relativ gesehen leichter wird. Insofern muss auch nicht notwendigerweise in jeder Falte oder Welle eines Falten- oder Wellenbalges ein umlaufender Rahmen zur Stabilisierung vorgesehen sein. Allerdings ist die Isolationswirkung, und zwar insbesondere auch hinsichtlich des Schalls, geringer als bei einem Balg mit einer doppellagigen Gewebebahn.

Aus der GB 374,802 A ist ein aus einem Gummiwerkstoff gegossener Balg bekannt, der zwei beabstandet zueinander angeordnete Gewebelagen aufweist, wobei zwischen den Gewebelagen eine metallische Verbindung vorgesehen ist.

Aus der DE 100 26 405 A1 ist ein Abstandsgewirk oder Abstandsgewebe bekannt.

Die EP 0 389 934 A1 beschreibt ein Doppelpol- oder Abstandsgewebe für einen Balg als Teil eines Übergangs der eingangs genannten Art. Aus dieser Literaturstelle ist nicht bekannt, wie bei einem aus einem solchen Abstandsgewebe hergestellter Balg das Durchhängen verhindert werden kann.

Der Erfindung liegt nunmehr die Aufgabe zu Grunde, eine Materialbahn für die Herstellung eines Balges als Teil eines Übergangs zwischen zwei gelenkig miteinander verbundenen Fahrzeugen zu schaffen, wobei ein solcher Balg verschiedene Anforderungen erfüllen muss, als da sind
- erhebliche Flexibilität;
- Formstabilität;
- gute Isolationseigenschaften, und zwar insbesondere hinsichtlich Schall und Temperatur;
- leichte Herstellung und leichte Montage.

Die Lösung der Aufgabe ergibt sich aus den Merkmalen des Kennzeichens des Anspruches 1 in Verbindung mit den Merkmalen des Oberbegriffs.Die Materialbahn weist eine textile Ober- und eine textile Unterseite auf, wobei zwischen Ober- und Unterseite Abstandsfäden vorgesehen sind, so dass sich im unbelasteten Zustand der Materialbahn zwischen Ober- und Unterseite ein Abstand ergibt. Bei einem solchen Abstandsgewebe handelt es sich weniger um ein Gewebe als vielmehr um eine Maschenware. Dies deshalb, weil insofern sowohl die Ober- als auch die Unterseite als Maschenware ausgebildet ist, wobei hinzukommt, dass auch die Polfäden, die den Abstand bereitstellen, mit der Ober- und Unterseite vermascht sind. Gerade diese Vermaschung und die Anordnung der Polfäden zwischen der textilen Ober- und Unterseite gibt einem solchen dreidimensionalen Gewebe eine hervorragende Flexibilität. Die Flexibilität ist hierbei umso höher, je länger die Polfäden zwischen Ober- und Unterseite sind. Nach einer Kunststoffbeschichtung der Ober- und/oder Unterseite ist ein solches Gewebe auch im Wesentlichen dicht, ganz ähnlich wie dies bei den bekannten Materialbahnen für die Herstellung von Bälgen der Fall ist.

Auch zeichnet sich das Material für einen Balg nach der Beschichtung dadurch aus, dass es eine hohe Isolationswirkung hat, und zwar sowohl hinsichtlich des Schalls als auch hinsichtlich der Temperatur. Dies deshalb, weil zwischen Ober- und Unterseite ein relativ großer Raum besteht, der mit Luft oder Schaum gefüllt ist.

Die Struktur der textilen Ober- und/oder Unterseite ist derart getroffen, dass ein Eindringen von Beschichtungsmaterial weitgehend verhindert wird. Als Beschichtungsmaterial kommt - wie bereits an anderer Stelle erläutert - ein Elastomer, zum Beispiel ein Silikon-Kautschuk, in Frage. Würde dieses Beschichtungsmaterial in das Material, also in das Abstandsgewebe, eindringen, dann würde es zu einer sogenannten Plattenbildung kommen die die Elastizität einer solchen Materialbahn derart einschränkt, dass diese als Balg, und zwar weder als Wellen- noch als Faltenbalg, kaum einsetzbar wäre.

Das Textil oder Abstandsgewirk, das als Maschenware ausgebildet ist, zeichnet sich des Weiteren dadurch aus, dass in bestimmten Abständen zwischen den einzelnen Polfäden parallel zueinander verlaufende Gassen vorgesehen sind, wobei die Größe der Gassen neben der Höhe der Polfäden maßgeblich für die Eigenelastizität eines solchen Materials ist. Die Gassen nehmen entsprechend parallel zueinander verlaufende Stützrahmen auf. Das heißt, die Stützrahmen verlaufen innerhalb des Gewebes und sind auch innerhalb des Gewebes durch die Polfäden in Längsrichtung des Balges fixiert. Ein solchermaßen hergestellter Balg ermöglicht eine preiswerte Herstellung, da gesonderte Maßnahmen zur Fixierung der Rahmen am Balgmaterial zur Erzielung der erforderlichen Steifigkeit des Balges, wie beim Stand der Technik erforderlich, hier nicht mehr notwendig sind. Des Weiteren entfallen im Wesentlichen sämtliche Näharbeiten; nach dem Stand der Technik ist es so, dass die einzelnen Falten oder Wellen abgenäht werden, und zwar mit Zwillingsnähten. Teilweise werden im Eckbereich gesonderte Einsätze aufgenäht. Dies alles entfällt, da die Rahmen im Inneren des Balgmaterials geführt sind. Hiermit einhergehend gibt es keine Dichtigkeitsprobleme ; nach dem Stand der Technik müssen im Bereich der Nähte besondere Maßnahmen getroffen werden, z. B. durch Aufbringen eines Dichtungslacks, um die erforderliche Dichtigkeit zu gewährleisten. Insofern lässt sich ein solcher Balg durchaus preisgünstig herstellen, wobei hinzukommt, dass ein solchermaßen hergestellter Balg eine hohe lsolationswirkung sowohl gegen Schall als auch gegen Temperatur aufweist, wegen - wie bereits ausgeführt - einer relativ dicken Luftschicht zwischen Ober- und Unterseite des dreidimensionalen Gewebes oder Gewirkes. Die von dem Balgstoff aufgenommenen Balgstützrahmen sind im Wesentlichen umlaufend ausgebildet, entsprechend der Querschnittskontur des Balges, sie sind allerdings an einem Ende offen, um sie über das Gelenk stülpen zu können.

Zur Erhöhung der Brandbeständigkeit ist das Material vorzugsweise aus Meta- oder Paraaramid hergestellt. In diesem Zusammenhang hat sich herausgestellt, dass die Anordnung der Gassen folgenden Vorteil hat: Bei Brandversuchen hat sich herausgestellt, dass in den Gassen die beim Schmoren des Materials entstehenden Gase in den Gassen nach unten geführt werden, wo sie dann austreten können, da der Balg unten geöffnet ist. Es ist also nicht so, wie man vermuten könnte, dass die Gassen durch die Zuführung von Sauerstoff brandbeschleunigend wirken; vielmehr werden die entstehenden schädlichen Gase tatsächlich durch die Gassen abgeführt.

Wechselweise oder alternierend können zu den Stützrahmen, die stangen- oder rohrförmig ausgebildet sind, auch Zugmittel in den Gassen angeordnet sein. Das heißt, es wechselt sich jeweils ein Stützrahmen mit einem Zugmittel, z. B. einem Drahtseil oder einem elastischen Seil, ab. Die Anordnung von Stützrahmen in den Gassen bewirkt zum einen, dass der Balg nicht durchhängt, zum anderen sorgen die Stützrahmen dafür, dass der Balg sich ordnungsgemäß falten kann. Wenn nun alternierend mit den Stützrahmen z. B. elastische Seile eingezogen werden, die unter Zugbeanspruchung stehen, dann wird hierdurch zum einen eine Gewichtsersparnis erreicht, da Seile gemeinhin leichter sind als Rahmen aus Vollmaterial oder auch rohrförmige Rahmen. Zum anderen wird durch ein vorgespanntes Zugseil, das den Balg an dieser Stelle einschnürt, erreicht, , dass an dieser Stelle eine Sollknickstelle für eine Falte entsteht.

Anhand der Zeichnung wird die Erfindung beispielhaft näher erläutert.
Fig. 1 zeigt schematisch einen Gelenkbus in einer Seitenansicht;
Fig. 2 zeigt schematisch einen Schnitt durch den Balg;
Fig. 3 zeigt das Abstandsgewebe in einer Seitenansicht im Schnitt;
Fig. 4 zeigt eine Ansicht auf das Abstandsgewebe gemäß Fig. 3.

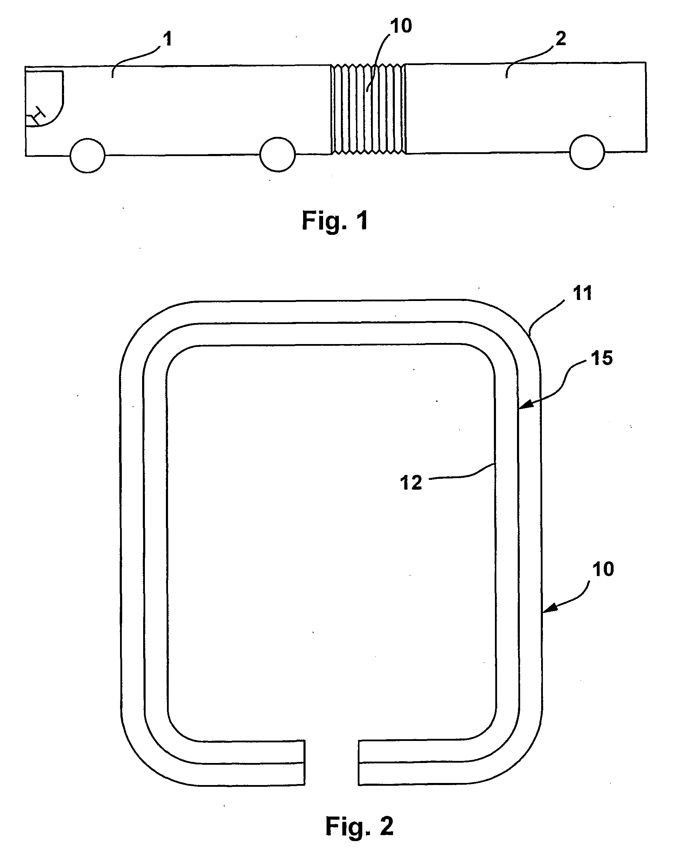

Figur 1 zeigt schematisch einen Bus mit einem Vorderwagen 1 und einem Hinterwagen 2, die durch einen Übergang mit einem Balg 10 verbunden sind.

Ein solcher Balg ist schematisch im Querschnitt in Figur 2 dargestellt. Der Balg zeichnet sich hierbei durch eine textile Oberseite 11 und eine textile Unterseite 12 aus, die durch Polfäden miteinander verbunden sind und durch diese Polfäden gleichzeitig auf Abstand gehalten werden. Die Polfäden, die mit der Ober- und Unterseite vermascht sind, weisen Abstände zueinander auf, und zwar in axialer Richtung des Balges, so dass sich Räume in Form von Gassen 16 für die Durchführung des Stützrahmens 15 ergeben. Die Größe der Gassen 16 kann hierbei so gewählt sein, dass der Rahmen 15 durch die die Gassen 16 bildenden Polfäden in seiner Lage fixiert ist, ohne die Elastizität des Materials bzw. eines solchermaßen hergestellten Balges zu beeinträchtigen. Wahlweise können alternierend mit Stützrahmen 15 auch Zugseile 17 vorgesehen sein.

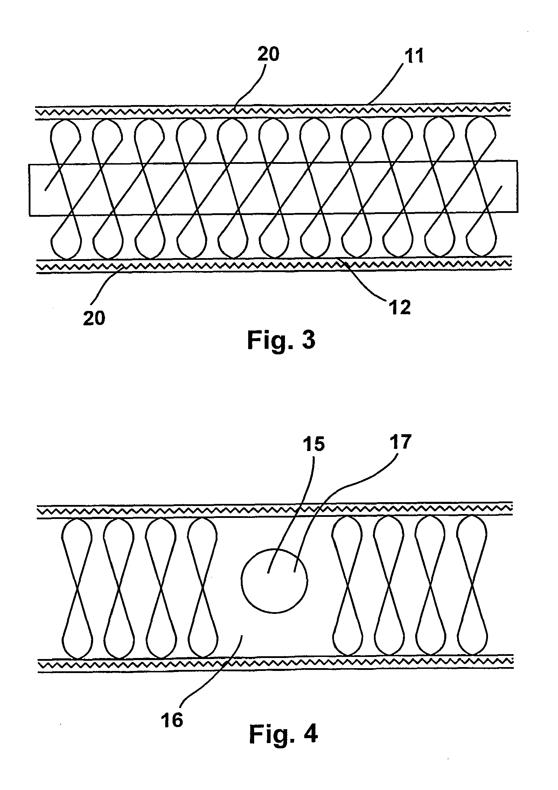

Die Ausbildung der Polfäden und die Anordnung der Polfäden zwischen der textilen Ober- und Unterseite 11, 12 ergibt sich insbesondere in Anschauung von Figur 3 und 4. So zeigt insbesondere Figur 4 eine Seitenansicht auf das Gewebe gemäß Figur 3 und insofern auch eine Gasse 16, die der Aufnahme des Rahmens 15 oder Zugseils 7 dient. Im unteren Bereich des Rahmens 10 weist der Rahmen Verschlussmittel (nicht dargestellt) auf, um im geöffneten Zustand einen solchen Balg mit einem Rahmen über das Gelenk, das die beiden Fahrzeugteile verbindet, überstülpen zu können. Der Balg selbst kann mit z. B. Klettband nach dem Stülpvorgang verbunden werden.

Materialober- und -unterseite sind vorzugsweise mit einer Beschichtung 20 versehen, die derart aufgetragen ist, dass diese Beschichtung 20 auf der textilen Ober- und Unterseite aufsitzt, jedoch nicht in das Gewebe als solches Eintritt, also nicht in den Bereich der Polfäden gelangt. Denn dies würde unweigerlich dazu führen, dass eine solche Materialbahn extrem versteift und auch erheblich an Gewicht zulegen würde. Das heißt, die textile Ober- und Unterseite ist derart gewählt, dass sie so dicht ist, dass das Beschichtungsmaterial nicht eindringen kann, aber dennoch derart ausgebildet ist, dass das Beschichtungsmaterial auf der Ober- bzw. Unterseite der Materialbahn haften bleibt. Der Abstand der Ober- und Unterseite zueinander bestimmt die Isolationswirkung gegenüber Schall aber auch gegenüber Temperatur.

## Patentansprüche

1. Balg als Teil eines Übergangs zwischen zwei gelenkig miteinander verbundenen Fahrzeugen oder einer Fluggastbrücke mit einer Materialbahn, die mit einer Kunststoffschicht versehen ist,
dass die Materialbahn eine textile Ober- und eine textile Unterseite (11, 12) aufweist, wobei zwischen Ober- und Unterseite als Polfäden ansgebildebe Abstandsfäden vorgesehen sind, so dass sich im unbelasteten Zustand der Materialbahn ein Abstand zwischen Ober- und Unterseite ergibt,
**dadurch gekennzeichnet,**
**dass** zwischen den Polfäden Gassen (16) verlaufen,
**dass** in bestimmten Abständen zueinander in den Gassen (16) parallel zueinander verlaufende Stützrahmen (15) angeordnet sind,
wobei die Stützrahmen (15) umlaufend der Querschnittskontur des Balges folgend ausgebildet sind.

2. Balg nach Anspruch 1,
**dadurch gekennzeichnet,**
**dass** die textile Ober- und/oder Unterseite (11, 12) eine Struktur aufweist, die ein Durchdringen des Beschichtungsmaterials (20) durch die Ober- und/oder Unterseite verhindert.

3. Balg nach einem der voranstehenden Ansprüche,
**dadurch gekennzeichnet,**
**dass** zur Erhöhung der Brandbeständigkeit des Materials zur Herstellung der Materialbahn Meta- und/oder Paraaramid Verwendung findet.

4. Balg nach einem der voranstehenden Ansprüche,
**dadurch gekennzeichnet,**
**dass** der Stützrahmen (15) im unteren Bereich ein Verschlussmittel aufweist.

5. Balg nach einem der voranstehenden Ansprüche,
**dadurch gekennzeichnet,**
**dass** der Stützrahmen (15) stangen- oder rohrförmig ausgebildet ist.

6. Balg nach einem der voranstehenden Ansprüche,
**dadurch gekennzeichnet,**
**dass** bei einer Mehrzahl von Gassen (16), die Gassen (16) alternierend Stützrahmen (15) und Zugmittel (17) aufnehmen.

7. Balg nach Anspruch 6,
**dadurch gekennzeichnet,**
**dass** das Zugmittel (17) ein Stahlseil ist.

## Claims

1. A bellows as part of a connection between two hinge-linked vehicles or of an aircraft boarding bridge with a web of material that is provided with a plastic coating, the web of material comprising a textile upper side and a textile underside (11, 12), spacer threads configured as pile yarns being provided between upper and underside for a spacing to form between upper and underside in the unloaded condition of the web of material,
**characterized in that**
lanes (16) extend between the pile yarns, that supporting frames (15), which run parallel to each other, are spaced at determined intervals in the lanes (16), wherein the supporting frames (15) are configured so as to be peripheral, conforming to the cross sectional contour of the bellows.

2. The bellows according to claim 1,
**characterized in that**
the textile upper and/or underside (11, 12) has a structure that prevents the coating material (20) from penetrating through the upper and/or underside.

3. The bellows according to one of the afore-mentioned claims,
**characterized in that**
in order to increase the fire resistance of the material, meta- and/or para-amid finds application in the manufacturing of the web of material.

4. The bellows according to one of the afore-mentioned claims,
**characterized in that**
the supporting frame (15) has a locking means in the lower region.

5. The bellows according to one of the afore-mentioned claims,
**characterized in that**
the supporting frame (15) is configured to be rod-shaped or tubular.

6. The bellows according to one of the afore-mentioned claims,
**characterized in that**
if there is provided a plurality of lanes (16), the lanes (16) receive supporting frames (15) and traction means (17) in an alternating fashion.

7. The bellows according to claim 6,
**characterized in that**
the traction means (17) is a steel rope.

## Revendications

1. Soufflet faisant partie d'une transition entre deux véhicules reliés entre eux de façon articulée ou d'une passerelle d'embarquement, avec une bande de matériau dotée d'une couche plastique, la bande de matériau comprenant un côté textile supérieur et un côté textile inférieur (11, 12), des fils d'espacement sous forme de fils de poil étant prévus entre le côté supérieur et le côté inférieur, résultant en un espace entre le côté supérieur et le côté inférieur dans l'état non chargé de la bande de matériau,
**caractérisé en ce que**
des couloirs (16) s'étendent entre les fils de poil, que des cadres de support (15)) parallèles sont disposés à intervalles déterminés dans les couloirs (16), les cadres de support (15) étant configurés de manière à suivre le contour de la section transversale du soufflet en périphérie.

2. Soufflet selon la revendication 1,
**caractérisé en ce que**
le côté textile supérieur et/ou inférieur (11, 12) comprends une structure qui empêche le matériau de revêtement (20) de pénétrer dans le côté supérieur et/ou inférieur.

3. Soufflet selon l'une quelconque des revendications précédentes,
**caractérisé en ce qu'**
afin d'augmenter la résistance au feu du matériau, du méta-aramide et/ou para-aramide est utilisé pour la production de la bande de matériau.

4. Soufflet selon l'une quelconque des revendications précédentes,
**caractérisé en ce que**
le cadre de support (15) comporte un moyen de fermeture dans la région inférieure.

5. Soufflet selon l'une quelconque des revendications précédentes,
**caractérisé en ce que**
le cadre de support (15) est configuré en forme de barre ou de tube.

6. Soufflet selon l'une quelconque des revendications précédentes,
**caractérisé en ce que**
lorsqu'une pluralité de couloirs (16) est prévue, les couloirs (16) reçoivent en alternance le cadre de support (15) et le moyen de traction (17).

7. Soufflet selon la revendication 6,
**caractérisé en ce que**
le moyen de traction (17) est un câble en acier.
